(19) Europäisches Patentamt
European Patent Office
Office européen des brevets

(11) Publication number: 0 167 233
A1

(12) EUROPEAN PATENT APPLICATION

(21) Application number: 85303105.2

(22) Date of filing: 01.05.85

(51) Int. Cl.⁴: G 01 F 1/74
G 01 F 1/704

(30) Priority: 09.05.84 GB 8411825

(43) Date of publication of application:
08.01.86 Bulletin 86/2

(84) Designated Contracting States:
BE DE FR GB IT NL

(71) Applicant: IMPERIAL CHEMICAL INDUSTRIES PLC
Imperial Chemical House Millbank
London SW1P 3JF(GB)

(72) Inventor: Green, Darrel
5 Hallmoor Close Kirklevington
Yarm Cleveland, TS15 9NN(GB)

(72) Inventor: Edmonds, Ernest Alderson
109 Wallington Road
Billingham Cleveland, TS23 3XQ(GB)

(74) Representative: Martin, David Lincoln et al,
Imperial Chemical Industries PLC Legal Department:
Patents PO Box 6 Bessemer Road
Welwyn Garden City Herts, AL7 1HD(GB)

(54) **Flow rate measurement.**

(57) The invention comprises a method for the determination of the volumetric flow rate of multi-phase fluid flows, for example, of the flow rate of an oil/water mixture in a conduit. A known amount of radioisotopic tracer is injected into at least one of the phases and the concentration of the tracer in the flow is determined at a downstream sampling station, thereby enabling the flow rate of the multi-phase flow to be determined. The tracer(s) used should be soluble in only one phase of the fluid flow with the provision that where a plurality of tracers is used, no two or more tracers are soluble in the same phase.

EP 0 167 233 A1

Croydon Printing Company Ltd

Flow Rate Measurement

The present invention relates to the determinaton of the volumetric flow rates of multi-phase fluid mixtures.

Methods for the measurement of flow rates of single-phase fluids, for example liquids, are well-established and well-known. Such methods may involve the use of, for example, current meters or various kinds of floats. Radioisotope dilution techniques are also used to measure the flow rates of single-phase flows. In one such method, a solution of a suitable radioisotope tracer is injected into the flow and samples are taken at regular intervals at one or more downstream sampling stations which are sufficiently distant from the injection point to allow full mixing of the injected tracer with the flowing stream. Dilution techniques are of particular value in locations where conventional flow measuring devices are impracticable, for example sewers.

The measurement of multi-phase flow rates has proved to be rather difficult and, as far as the Applicants are aware, dilution techniques have not so far been successful in such measurements. Some of the problems which have arisen have been related to the stability of the tracer in the multi-phase system. A tracer may be stable in one phase but prove to be reactive with the other phase or one of the other phases or the tracer may distribute itself between the phases.

We have now surprisingly found that it is possible to use a radioisotope dilution technique in the determination of a multi-phase liquid flow rate.

Accordingly the present invention provides a method for the determination of the flow rate of a multi-phase fluid flow which comprises injecting at least one, and preferably a plurality of different, radioisotope tracers into the flow, the or each of said tracers being soluble in one phase only of the flow and substantially insoluble in the other phase or phases, with the proviso that the tracers are selected such that no two or more tracers are soluble in the same phase, removing a sample of the multi-phase flow from

the flow at a point downstream from the point of injection of the tracer(s) and determining from the concentration of the tracer in at least any one phase of said sample the flow rate of that phase of the multi-phase flow.

One application of the method of this invention is in the determination of the flow rate of oil/water mixtures along conduits and pipelines. Crude oil extracted from some oil fields contains varying amounts of water depending on the location of the field. It has hitherto proved difficult to measure the flow rate of the two-phases of the liquid independently with any great accuracy. For example, conventional flowmeters, if they work at all, will measure the total flow only and it has not proved possible to adapt them.

We have now found that the flow rate of an oil/water two-phase liquid mixture can be determined accurately by a radioisotope dilution technique according to the method of this invention. In this embodiment of the present invention the tracers used are an aqueous-soluble tracer, for example tritiated water, and organic-soluble tracer, for example an organic complex of the tracer $Fe^{59}$, for example ferrocene.

Principles and techniques used in methods such as the total count method and the constant rate injection method for determinations of the flow rates of single-phase flows may be used or adapted for use, where suitable, in the method according to this invention for the determination of multi-phase fluid flow rates.

The tracers may be injected separately or together into the multi-phase system flow. The sampling point is selected sufficiently far downstream to allow thorough mixing of the injected tracer solutions with the multi-phase flow and at this point the sample is collected in conventional manner. The sample is separated into its component phases and the concentration of the appropriate tracer in each phase measured. For example, in the constant rate injection embodiment of the method of this invention, the flow rate for each phase is calculated from the equation:

$$F_1 = \frac{C_2}{C_1} \cdot F_2 \qquad \text{where } F_2 \ll F_1 \text{ and}$$

where $F_1$ = flow rate of phase at sample point

$C_1$ = concentration of tracer in phase at sample point

$F_2$ = flow rate of injected tracer material

$C_2$ = concentration of tracer in injected material

A wide range of radioisotope tracers may be used in the method of this invention and the actual tracer(s) used will depend on such factors as the nature of the phases under investigation. Suitable tracers for injection into an aqueous phase, for example, include $^{137}Cs^{+}$, $^{134}Cs^{+}$, $^{60}Co^{2+}$, $S^{14}CN^{-}$, $^{51}Cr^{3+}$. Suitable tracers for injection into an organic phase include for example $^{3}H$ and $^{14}C$ in the form of a labelled hydrocarbon or other organic compound. For the gas phase, suitable tracers include $^{3}H$-methane and $^{14}C$-methane.

In some embodiments of the method of this invention it may not be necessary to inject more than one tracer. For example, the total flow rate of a two-phase liquid flow, for example oil/water, may be known from separate conventional metering of the flow. In such a case, determination of the flow rate of one of the phases by the method of this invention will enable the flow rate of the other phase to be determined by simple subtraction.

The method of this invention lends itself to continuous or occasional measurement of flow rates, as desired. It can also be applied in automatic fashion, with the minimum of operator involvement required. Thus, the tracer or tracers may be injected at pre-set intervals or continuously through an in-line mixing device and the multi-phase flow automatically sampled a short distance downstream in, for example, a second in-line mixer. The phases can be automatically separated and individual appropriate radiation detectors used to determine the concentration of the tracer in each phase. The determined concentration can then be compared with the injected tracer concentration and the flow rate determined.

Claims

1. A method for the determination of the flow rate of a multi-phase flow which comprises injecting at least one radioisotope tracer into the flow, the or each of said tracers being soluble in one phase only of the flow and substantially insoluble in the other phase or phases, with the proviso that the tracers are selected such that no two or more tracers are soluble in the same phase, removing a sample of the multi-phase flow from the flow at a point downstream from the point of injection of the tracer(s) and determining from the concentration of the tracer in at least any one phase of said sample the flow rate of that phase of the multi-phase flow.

2. A method as claimed in claim 1 wherein a plurality of different radioisotope tracers is injected into the multi-phase flow.

3. A method as claimed in claim 2 wherein the tracers are injected together into the multi-phase flow.

4. A method as claimed in any one of the preceding claims wherein one phase of the multi-phase flow is an aqueous phase and the tracer injected into said aqueous phase is selected from $^{137}Cs^{+}$, $^{60}Co^{2+}$, $S^{14}CN$, $^{51}Cr^{3+}$ and tritiated water.

5. A method as claimed in any one of the preceding claims wherein one phase of the multi-phase flow is an organic phase and the tracer injected into said organic phase is a $^{3}H$ or $^{14}C$ labelled organic compound.

6 A method as claimed in any one of the preceding claim wherein one phase of the multi-phase flow is a gaseous phase and the tracer injected into said gaseous phase is selected from $^{3}H$-methane and $^{14}C$-methane.

7. A method as claimed in any one of claims 1 to 5 wherein the multi-phase flow comprises an oil/water mixture.

8. A method as claimed in claim 7 wherein the tracer injected into said oil/water mixture flow comprises tritiated water.

9. A method as claimed in claim 7 or 8 wherein the tracer injected into said oil/water mixture flow comprises an $Fe^{59}$ - labelled organic complex compound.

European Patent Office

# EUROPEAN SEARCH REPORT

0167233

Application number

EP 85 30 3105

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | ATOMKERNENERGIE-KERNTECHNIK, vol. 33, no. 2, 1979, pages 139-143; R. LÖFFEL: "Massenstrommessungen an Ein- und Mehrphasenströmungen" * Abstract; page 139, paragraph 2.1; page 140, figure 1; page 142, paragraph 3.2.1 * --- | 1-3 | G 01 F 1/74<br>G 01 F 1/704 |
| X | DE-A-2 614 993 (R. LÖFFEL) * Page 1, claims 1,2 * --- | 1-3 | |
| A | US-A-4 197 456 (FLEISCHER et al.) * Page 1, lines 29-33 * --- | 4,6 | |
| A | NUCLEONICS, vol. 17, no. 12, December 1959, page 112; V.P. GUINN et al.: "Measuring oil consumption with tritium tracers" * Right-hand column, paragraphs 3,4 * --- -/- | 4,7,8 | TECHNICAL FIELDS SEARCHED (Int Cl 4)<br>G 01 F |

The present search report has been drawn up for all claims

| Place of search | Date of completion of the search | Examiner |
|---|---|---|
| THE HAGUE | 19-08-1985 | NUIJTEN E.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

0167233
Application number

EP 85 30 3105

| DOCUMENTS CONSIDERED TO BE RELEVANT | | | Page 2 |
|---|---|---|---|
| Category | Citation of document with indication, where appropriate, of relevant passages | Relevant to claim | CLASSIFICATION OF THE APPLICATION (Int. Cl 4) |
| A | ISOTOPES AND RADIATION TECHNOLOGY, vol. 8, no. 3, spring 1971, pages 287-309; R.H. LAFFERTY, Jr.: "Flow measurements with radioisotopes" * Page 294, right-hand column, paragraph 2; page 295, right-hand column; page 296, left-hand column, "Tritium (3H)" and "60Co" * ----- | 4-6,8 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 19-08-1985 | NUIJTEN E.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82